# EUROPÄISCHE PATENTSCHRIFT

(11) **EP 1 234 731 B1**
(45) Veröffentlichungstag und Bekanntmachung des Hinweises auf die Patenterteilung: **14.01.2004**
(21) Anmeldenummer: 02002931.0
(22) Anmeldetag: 09.02.2002
(51) Int. Cl.: B60R 21/16

(54) **Airbageinheit**
Airbagunit
Unité d'airbag

(30) Priorität: 21.02.2001 DE 10108169
(43) Veröffentlichungstag der Anmeldung: 28.08.2002
(73) Patentinhaber: Bayerische Motoren Werke Aktiengesellschaft, 80809 München (DE)
(72) Erfinder: Bleicher, Stephan, 84069 Schierling (DE); Decker, Hubert, 84097 Herrngiersdorf (DE)

(56) Entgegenhaltungen:
- DE-A- 3 829 368
- DE-A- 19 801 777
- DE-C- 19 932 696
- US-A- 6 007 090

## Beschreibung

Die Erfindung bezieht sich auf ein Motorrad mit einer Airbageinheit, wie sie im Oberbegriff der Hauptansprüche 1 und 2 beschrieben ist.

Aus der US-A 6 007 090 ist ein Motorrad bekannt, bei dem sich eine Airbageinheit fahrzeugfest vor dem Kraftstofftank in unmittelbarer Nähe des Fahrzeuglenkers befindet. Kommt es zu einem ungewollten Aufblasen des Luftsacks im Fahrbetrieb, wird dem Fahrer innerhalb weniger Millisekunden die Sicht versperrt und es kann insbesondere bei Motorradfahrern zu unfreiwilligen, gefährlichen Lenkbewegungen kommen. Das muss aber nicht notwendigerweise zum Unfall führen. Gerade geistesgegenwärtige Fahrer können das Fahrzeug weiter unter Kontrolle halten, insbesondere auch deswegen, weil der Luftsack bei herkömmlichen Airbageinheiten sofort nach dem Aufblasen wieder in sich zusammenfällt.

Die DE 199 32 696 C zeigt eine Airbageinheit mit einem kleinen Luftsack, der sich im Kollisionsfall zunächst öffnet und dabei die Form eines flachen Kissens annimmt. Bei schwereren Kollisionen, also bei hohen Verzögerungswerten, entfaltet sich ein zweiter Luftsack um den ersten Luftsack herum und verändert dessen Form in Richtung zum Fahrzeuginsassen. Die Standzeit des zweiten Luftsacks ist kürzer als die des ersten Luftsacks, und sobald der zweite Luftsack erschlafft, können federelastische Formungsmittel den ersten Luftsack wieder in seine ursprüngliche Kissenform zurückführen.

Aufgabe der Erfindung ist es, dem Fahrer nach dem Aufblasen des Luftsacks die ungehinderte Weiterfahrt zu ermöglichen.

Die Aufgabe wird erfindungsgemäß mit den kennzeichnenden Merkmalen der Anspruch 1 und 2 gelöst. Eine Weitere Ausgestaltung der Erfindung ergibt sich aus dem Unteranspruch.

Nach der Erfindung wird der Luftsack nach dem Aufblasen sofort wieder vom Fahrer wegverlagert in eine Position, in der er den Fahrer nicht weiter behindert. Im einfachsten Fall wird über einen geeigneten Mechanismus der Luftsack in Richtung Airbageinheit zurückgezogen und dort festgelegt. Er behindert dadurch den Fahrer nicht weiter und versperrt ihm insbesondre nicht länger die Sicht, da auf diese Weise ein Flattern im Fahrtwind unterbunden ist.

Vorteilhafte Ausgestaltungen der Erfindung ergeben sich aus der nachfolgenden Beschreibung anhand der dazugehörenden Zeichnung. Es zeigen
- Figur 1: ausschnittsweise die Kontur eines Motorrads mit einem entfalteten, aufgeblasenen Luftsack,
- Figur 2: eine erste Ausführung einer Rückholeinrichtung für den Luftsack und
- Figur 3: eine zweite Ausführung einer derartigen Rückholeinrichtung.

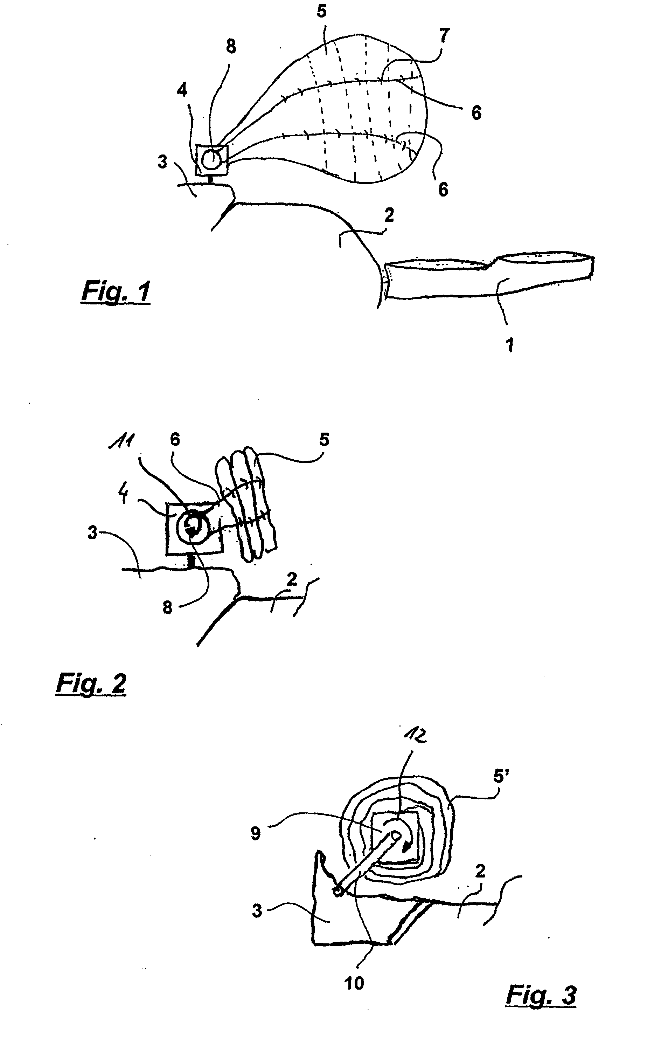

Ein Motorrad, das nach **Figur 1** lediglich angedeutet ist, weist eine Sitzbank 1 und einen davor - in Fahrtrichtung - angeordneten Kraftstofftank 2 auf. Ein vor dem Tank vorgesehener fahrzeugfester Abschnitt 3 trägt eine Airbageinheit 4. Die Einheit besteht aus einem nur schematisch dargestellten Gehäuse mit einem nicht erkennbaren Gasgenerator und einem im Gehäuse verankerten Luftsack 5. Der Gasgenerator wird von einem ebenfalls nicht erkennbaren Sensor über eine Auswerteelektronik angesteuert und gezündet. Er erzeugt das notwendige Gas zum Aufblasen des Luftsacks 5, der dabei die in Figur 1 erkennbare Gestalt annimmt. Um einen weichen Aufprall des Fahrer auf den Luftsack 5 zu erreichen, entweicht das Gas im Luftsack 5 bereits wieder beim Aufblasen oder spätestens nach Erreichen der Endform über nicht dargestellte Abströmöffnungen. Schon kurze Zeit (Millisekunden) nach dem Zünden des Generators ist der Luftsack wieder entleert.

Um zu verhindern, dass er dann schlaff über dem Brennstofftank liegt und dabei die Bewegungsfreiheit des Fahrers beeinträchtigt, ist der Luftsack mit einem Verzurrsystem verbunden, das ihn in Richtung Ausgangslage zurückzieht. Das Verzurrsystem besteht aus Fangbändern 6, die mit einem Ende am Luftsack 5 befestigt sind und durch am Luftsack 5 vorgesehene Schlaufen 7 zu einer der Airbageinheit 4 zugeordneten Spule 8 führen. Sie sind mit dem anderen Ende an der Spule 8 festgelegt.

Beim Aufblasen des Luftsacks 5 werden die zuvor auf der Spule 8 aufgerollten Fangbänder 6 abgewickelt. Sobald der Luftsack 5 voll aufgeblasen ist - und im Normalfall seine Schutzfunktion ausgeübt hat - rollt die bspw. durch einen Elektromotor angetriebene Spule den erschlaffenden Luftsack auf, bis er festgezurrt am Fahrzeug bzw. an der Airbageinheit 4 anliegt.

Dieser Zustand ist in **Figur 2** dargestellt. Es liegt auf der Hand, dass der Luftsack dadurch nicht - wie im Ausgangszustand - ordentlich zusammengefaltet in das Airbaggehäuse zurückgeführt ist. Dies ist aber für den verfolgten Zweck, den Airbag aus einem den Fahrer störenden Bereich zu bringen, auch nicht notwendig.

In **Figur 3** ist ein Luftsack 5' dargestellt, der durch einen anderen Mechanismus aufgerollt wurde. In diesem Fall ist der Luftsack nicht an Fangbänder wie in Figur 1 und 2 befestigt, sondern - wie auch nach Fig. 1 und 2 - lediglich an einem Airbaggehäuse 9 in üblicherweise mit einem Ende verankert. Das Airbaggehäuse 9 lässt sich über ein Gelenksystem 10 vom Fahrzeugaufbau (Abschnitt 3) abheben. Dabei kann es um eine am Gelenksystem 10 vorgesehene Achse um sich selbst drehen.

Figur 3 zeigt den Endzustand, nach dem der erschlaffte Luftsack 5' aufgerollt ist. Im Ausgangszustand liegt der Luftsack 5' zusammengefaltet in dem Airbaggehäuse 9. Das Gehäuse selbst ruht auf dem Fahrzeug. Beim Zünden des Airbag wird der Luftsack ähnlich wie in Figur 1 aufgeblasen. Dabei hebt das Gelenksystem 10 das Airbaggehäuse 9 vom Fahrzeug ab. Nach dem Aufblasen beginnt sofort das Airbaggehäuse 9 zu drehen (bspw. wiederum über einen Elektromotor angetrieben) und wickelt den erschlaffenden Luftsack 5' auf, bis er die in Figur 3 gezeigte Lage einnimmt. Ein Pfeil 11 in Figur 2 und ein Pfeil 12 in Fig. 3 zeigen die Wickelrichtung an.

## Patentansprüche

1. Motorrad mit einer Airbageinheit (4), einer Sitzbank (1) und einem davor angeordneten Kraftstofftank (2), wobei die Airbageinheit (4) an einem in Fahrtrichtung vor dem Kraftstofftank (2) fahrzeugfesten Abschnitt (3) verankert ist und einen im Auslösefall sich schützend vor dem Fahrer entfaltenden Luftsack (5, 5') aufweist, **dadurch gekennzeichnet, dass** der nach seinem Entfalten sich wieder entleerende Luftsack (5, 5') in Richtung der Airbageinheit in eine den Fahrer nicht behindernde Lage zurückgezogen wird und dabei der Luftsack (5) mit einem Verzurrsystem verbunden ist, das aus mit dem Luftsack (5) verbundenen Fangbändern (6) und einer die Fangbänder (6) aufwickelnden, der Airbageinheit zugeordneten Spule (8) besteht.

2. Motorrad mit einer Airbageinheit (4), einer Sitzbank (1) und einem davor angeordneten Kraftstofftank (2), wobei die Airbageinheit (4) an einem in Fahrtrichtung vor dem Kraftstofftank (2) fahrzeugfesten Abschnitt (3) verankert ist und einen im Auslösefall sich schützend vor dem Fahrer entfaltenden Luftsack (5, 5') aufweist, **dadurch gekennzeichnet, dass** der nach seinem Entfalten sich wieder entleerende Luftsack (5, 5') in Richtung der Airbageinheit in eine den Fahrer nicht behindernde Lage zurückgezogen wird und sich dabei die Airbageinheit um ihre eigene, quer zur Fahrzeugrichtung liegenden Achse drehen lässt.

3. Motorrad mit einer Airbageinheit nach Anspruch 2, **dadurch gekennzeichnet, dass** die Airbageinheit über ein Gelenksystem (10) mit dem Fahrzeugaufbau verbunden ist, und dass beim Zünden des Airbags das Gelenksystem (10) die Airbageinheit soweit vom Fahrzeugaufbau abhebt, dass die Airbageinheit sich frei in sich drehen kann und dabei den nach seinem Aufblasen sich entleerenden Luftsack (5') aufwickelt.

## Claims

1. A motorcycle with an airbag unit (4), a seat (1) and a fuel tank (2) disposed in front of the seat, wherein the airbag unit (4) is anchored to a portion (3) fixed to the vehicle in front of the tank (2) in the direction of travel and comprises an airbag (5, 5') which unfolds and protects the driver in the event of an accident, **characterised in that** the airbag (5, 5'), when emptied after unfolding, is pulled towards the airbag unit into a position where it does not impede the driver, the airbag (5) being connected to a clamping system comprising straps (6) connected to the airbag (5) and a coil (8) associated with the airbag unit for winding up the straps (6).

2. A motorcycle with an airbag unit (4), a seat (1) and a fuel tank (2) disposed in front of the seat, wherein the airbag unit (4) is anchored to a portion (3) fixed to the vehicle in front of the tank (2) in the direction of travel and comprises an airbag (5, 5') which unfolds and protects the driver in the event of an accident, **characterised in that** the airbag (5, 5'), when empty after unfolding, is pulled towards the airbag unit into a position where it does not impede the driver, the airbag unit being rotatable around its own axis transversely of the direction of the vehicle.

3. A motorcycle with an airbag unit according to claim 2, **characterised in that** the airbag unit is connected to the vehicle body by a coupling system (10) and when the airbag is ignited the coupling system (10) lifts the airbag unit far enough from the vehicle body for the airbag unit to be able to rotate freely and wind up the airbag (5') after it has inflated and emptied.

## Revendications

1. Motocyclette avec une unité de coussin de sécurité gonflable (4), une banquette (1) et un réservoir de carburant (2) disposé au-devant, l'unité de coussin de sécurité gonflable (4) étant fixée dans une portion (3) ancrée à la motocyclette à l'avant du réservoir de carburant (2) dans la direction de conduite et présentant un sac gonflable (5, 5') se déployant en cas de déclenchement devant le conducteur à protéger,
**caractérisée en ce que**
le sac gonflable (5, 5') se re-dégonflant après son déploiement est rétracté en direction de l'unité de coussin de sécurité gonflable dans une position non gênante pour le conducteur, et le sac gonflable (5) est ainsi relié à un système d'arrimage qui comprend des bandes de serrage (6) reliées au sac gonflable (5) et une bobine (8) associée à l'unité de coussin de sécurité gonflable et enroulant les bandes de serrage (6).

2. Motocyclette avec une unité de coussin de sécurité gonflable (4), une banquette (1) et un réservoir de carburant (2) disposé au-devant, l'unité de coussin de sécurité gonflable (4) étant fixée dans une portion (3) ancrée à la motocyclette à l'avant du réservoir de carburant (2) dans la direction de conduite et présentant un sac gonflable (5, 5') se déployant en cas de déclenchement devant le conducteur à protéger,
**caractérisée en ce que**
le sac gonflable (5, 5') se re-dégonflant après son déploiement est rétracté en direction de l'unité de coussin de sécurité gonflable dans une position non gênante pour le conducteur, et ainsi l'unité de coussin de sécurité gonflable se laisse tourner autour de son propre axe transversalement à la direction de conduite.

3. Motocyclette avec une unité de coussin de sécurité gonflable selon la revendication 2,
**caractérisée en ce que**
l'unité de coussin de sécurité gonflable est reliée à une caisse par un système d'articulation (10) et, en déclenchant le coussin de sécurité gonflable, le système d'articulation (10) dégage l'unité de coussin de sécurité gonflable de la caisse du véhicule de sorte que l'unité de coussin de sécurité gonflable se laisse tourner librement dedans et ainsi, après son gonflage, enroule le sac gonflable (5') qui se dégonfle.
